Europäisches Patentamt

European Patent Office

Office européen des brevets

(19)

(11) Veröffentlichungsnummer : **0 099 569**
**B1**

(12) # EUROPÄISCHE PATENTSCHRIFT

(45) Veröffentlichungstag der Patentschrift :
30.10.85

(21) Anmeldenummer : 83107050.3

(22) Anmeldetag : 19.07.83

(51) Int. Cl.⁴ : **H 04 N 17/00**

(54) **Verfahren zum Beurteilen der Qualität eines Fernsehsenders.**

(30) Priorität : 22.07.82 DE 3227321

(43) Veröffentlichungstag der Anmeldung :
01.02.84 Patentblatt 84/05

(45) Bekanntmachung des Hinweises auf die Patenterteilung : 30.10.85 Patentblatt 85/44

(84) Benannte Vertragsstaaten :
FR GB NL SE

(56) Entgegenhaltungen :
DD-A- 28 672
DE-A- 2 849 025
RUNDFUNKTECHNISCHE MITTEILUNGEN, 26. Jahrgang, Mai/Juni, 3/82, Hamburg, GÜNTER SCHNEE-
BERGER "Beurteilung und Stand der Fernsehtonqualität beim Differenzträger-Tonempfang", Seiten 106-
111
RUNDFUNKTECHNISCHE MITTEILUNGEN, 26. Jahrgang, 1982, Heft 4, Hamburg. CLAUS PETER PFAF-
FINGER, GÜNTER SCHNEEBERGER "Zur Gestaltung
einer automatischen Qualitätsüberwachung der
ARD-Fernsehsender", Seiten 149-161

(73) Patentinhaber : **Rohde & Schwarz GmbH & Co. KG**
**Mühldorfstrasse 15**
**D-8000 München 80 (DE)**

(72) Erfinder : **Schneeberger, Günther**
**Kreuzjochstrasse 6**
**D-8000 München 82 (DE)**

(74) Vertreter : **Graf, Walter**
**Sckellstrasse 1**
**D-8000 München 80 (DE)**

EP 0 099 569 B1

## Beschreibung

Die Erfindung bezieht sich auf ein Verfahren gemäß dem Oberbegriff des Patentanspruchs. Ein derartiges Verfahren ist aus « Rundfunktechnische Mitteilungen », Heft 3, 1982, Seiten 106 bis 111 bekannt.

Bei der Aussendung eines AM-modulierten Bildträgersignals können in der Modulationsstufe und/oder in den Verstärkungsstufen des Senders pegelabhängige Phasenabweichungen des Bildträgersignals auftreten, welche zu Tonstörungen beim Differenzträgerempfang und/oder zu Bildstörungen (im Falle der NTSC-Norm) führen. Überlicherweise erfolgt die Qualitätsbeurteilung des gesendeten Bildsignals hinsichtlich seines Einflusses auf Tonstörungen beim Differenzträgerempfang durch Messung des Störabstandes im Tonkanal bei unmoduliertem Tonträger anhand spezieller, während der Programmpausen ausgestrahlter Bildmodulationssignale (beispielsweise Testbild). Es ist ferner bekannt (DE-OS 28 49 025), zur Qualitätsbeurteilung dienende Güteparameter durch Abtastung von in das Fernsehsignal eingeblendeten Prüfzeilensignalen mittels Abtast- und Halteschaltungen sowie nachgeschalteter Analog/Digitalwandler zu gewinnen. Aus den digitalisierten Abtastwerten werden in einem Rechner die gewünschten Güteparameter ermittelt. Das bekannte verfahren gestattet zwar eine Erfassung von Abtastwerten während des laufenden Programmes ; es gibt jedoch keinen Hinweis, wie die Güteparameter im einzelnen abgeleitet werden, insbesondere hinsichtlich einer qualitativen Aussage über den Tonempfang.

Die Aufgabe der Erfindung besteht darin, ein Verfahren der eingangs erwähnten Art zu schaffen, welches eine Qualitätsbeurteilung des Bildträgersignals auch hinsichtlich seines Einflusses auf Tonstörungen beim Differenzträgerempfang bei laufendem Fernsehprogramm ermöglicht.

Diese Aufgabe wird erfindungsgemäß durch die kennzeichnenden Merkmale des Patentanspruchs gelöst.

Die Erfindung beruht auf der Überlegung, anstelle einer Messung des Störabstandes im Tonkanal die pegelabhängigen Phasenabweichungen des Bildträgersignals direkt zu messen und für die Qualitätsbeurteilung des Fernsehsenders heranzuziehen. Diese Messung hat den Vorteil, daß sie auch während des laufenden Fernsehprogramms durchführbar ist, so daß eine dauernde Überwachung von Fernsehsendern hinsichtlich der Tonqualität möglich ist. Aus den gewonnenen Meßwerten lassen sich darüberhinaus eindeutigere Hinweise auf die spezifischen Störungsquellen als aus Störabstandswerten ableiten. Desweiteren können im Falle von NTSC-Bildmodulationssignalen die gewonnenen Meßwerte zur Bildqualitätsbeurteilung herangezogen werden.

Die Erfindung wird nachstehend anhand der Zeichnungen näher erläutert. Es zeigt :

Figur 1 eine Vektordarstellung eines AM-modulierten Bildträgersignals, wobei der Synchronimpuls, der Schwarzwert und der Weißwert im einzelnen dargestellt sind ;

Figur 2 den Zeitverlauf des AM-modulierten Bildträgersignals gemäß Fig. 1, und

Figur 3 ein Blockschaltbild einer Anordnung zur Durchführung des erfindungsgemäßen Verfahrens.

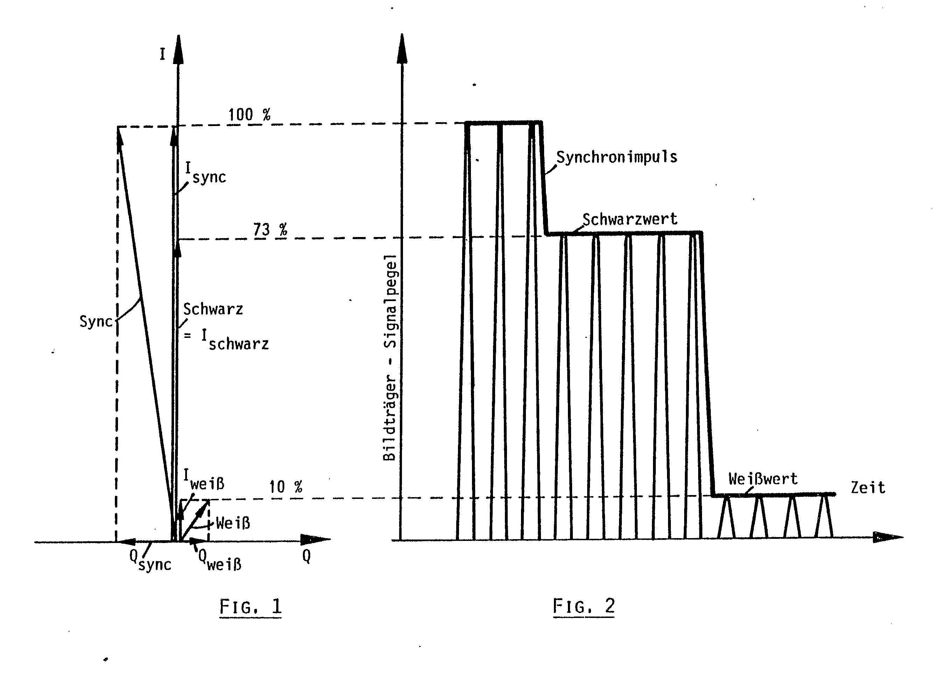

Das in Fig. 1 dargestellte AM-modulierte Bildträgersignal besteht in der vektoriellen Darstellung aus einem rotierendem Zeiger veränderlicher Länge, wobei jeder Vektor in eine I-Komponente (Ordinate) und eine Q-Komponente (Abszisse) zerlegt werden kann. Die I-Komponente wird als Inphasekomponente bezeichnet, während die Q-Komponente als Quadraturkomponente bezeichnet wird. Entsprechend dem zeitlichen Verlauf des Bildträger-Signalpegels gemäß Fig. 2 mit Pegelwerten für den Synchronimpuls, den Schwarzwert und den Weißwert entsprechend 100 %, 73 % bzw. 10 % Pegelwert sind in Fig. 1 drei Vektoren « Sync », « Schwarz » und « Weiß » eingezeichnet. Der Synchronvektor hat entsprechend die Komponenten $I_{sync}$ und $Q_{sync}$, während der mit der Ordinate zusammenfallende Schwarz-Vektor nur die Komponente $I_{schwarz}$ enthält und der Weiß-Vektor die Komponenten $I_{weiß}$ und $Q_{weiß}$ umfaßt. Bei idealer Funktionsweise der Synchrondemodulatoren weist der Schwarz-Vektor keine Q-Komponente auf.

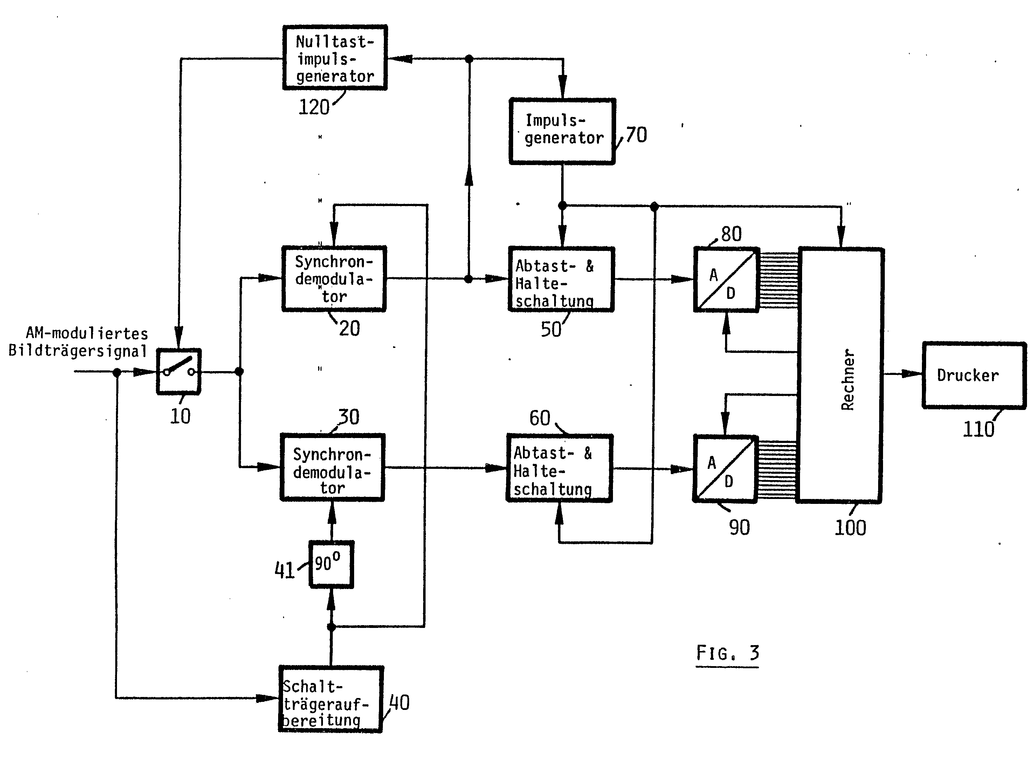

Die in Fig. 3 dargestellte Schaltungsanordnung zur Durchführung des erfindungsgemäßen Verfahrens beruht generell darauf, die I- und Q-Komponenten des Vektors gemäß Fig. 1 zu erfassen und hieraus den Phasenwinkel des zugehörigen Vektors zu errechnen. Dabei wird der Umstand, daß die Q-Komponente des Schwarz-Vektors bei idealer Funktionsweise der Synchrondemodulatoren fehlt, zur Korrektur der Meßwerte verwendet.

Wie im einzelnen aus Fig. 3 ersichtlich ist, wird das ankommende, AM-modulierte Bildsignal über eine normalerweise geschlossene Sperrschaltung 10 zwei Synchrondemodulatoren 20, 30 zugeführt, welche aus dem Bildsignal die I- bzw. Q-Komponente gewinnen. Die Synchrondemodulatoren 20, 30 werden von einer Schaltträger-Aufbereitungsstufe 40 gesteuert, deren Steuereingang das AM-modulierte Bildträgersignal zugeführt ist. Das Steuersignal für den Synchrondemodulator 30 wird gegenüber dem Steuersignal für den Synchrondemodulator 20 mittels eines Phasengliedes 41 um 90° entsprechend der in Fig. 1 dargestellten Phasenlage der Komponenten I und Q phasenverschoben. Die I- und Q-Komponenten werden jeweils einer zugeordneten Abtast- und Halteschaltung 50 bzw. 60 zugeführt, welche aus den betreffenden Komponenten während eines bestimmten Zeitintervalls, beispielsweise einer Fernsehprüfzeile, eine Folge von Amplitudenproben entnehmen und speichern. Zur Steuerung der Abtast- und Halteschaltungen 50, 60 dient ein Impulsgenerator 70, der durch die I-Komponente synchronisiert wird. Die gespeicherten Abtastwerte werden mit Hilfe von Analog/Digitalwandlern 80 bzw. 90 in digitale Form übergeführt, welche der Abtast- und Halteschaltung 50 bzw. 60 nachgeschaltet sind. Die digitalen Abtastwerte werden von den Analog/Digitalwandlern 80, 90 in einen Rechner 100 eingegeben, der mit einem Zeitsteuereingang an den Ausgang des Impulsgenerators 70 angeschlossen ist. Jeweils ein Steuerausgang des Rechners steuert einen zugeordneten Analog/Digitalwandler 80 bzw. 90. Das Ausgangssignal des Rechners 100 wird über einen Drucker 110 zur Anzeige gebracht.

Die Funktionsweise der in Fig. 3 dargestellten Schaltungsanordnung ergibt sich wie folgt :

Bei durchgeschalteter Sperrschaltung 10 wird das AM-modulierte Bildsignal mittels der Synchrondemodulatoren 20, 30 in seine videofrequenten I- und Q-Komponenten übergeführt. Die mittels der Abtast- und Halteschaltungen 50, 60 und der Analog/Digitalwandler 80, 90 gewonnenen, digitalen Abtastwerte der I-Komponente bzw. der Q-Komponente werden paarweise in dem Rechner 100 zur Berechnung des Phasenwinkels des zugeordneten Vektors gemäß Fig. 1 verwendet. Um vor dieser Berechnung die Abtastwerte auf einen Bezugswert beziehen zu können, erzeugt ein durch die I-Komponente synchronisierter Nulltastimpulsgenerator 120 ein kurzzeitiges Schaltsignal für die Sperrschaltung 10, welche dadurch sperrt und das Bildsignal von den Synchrondemodulatoren 20, 30 abtrennt. Die während dieses Schaltsignals erzeugten Abtastwerte in den Abtast- und Halteschaltungen 50, 60 werden als Referenzwerte bei der Kalibrierung der übrigen Abtastwerte im Rechner 100 benutzt.

Üblicherweise verwendete Synchrondemodulatoren weisen einen zulässigen Phasenfehler des Schaltträgers von ± 1° oder mehr auf, so daß die vorstehende Annahme einer idealen Arbeitsweise der Synchrondemolulatoren in der Praxis nicht zutrifft. Aus diesem Grund besitzt der Schwarz-Vektor eine von Null verschiedene Q-Komponente. Diese Q-Komponente des Schwarz-Vektors stellt ein Maß für die Phasen-Fehllage des Schaltträgers am Ausgang der Schaltträger-Aufbereitungsstufe 40 und damit ein Maß für den Fehler der in der vorstehenden Weise errechneten Phasenwinkel dar. Um diesen Fehler zu beseitigen, selektiert der Rechner 100 die I-Komponente und Q-Komponente des Schwarz-Vektors ; falls die Komponente $Q_{schwarz}$ von Null verschieden ist, werden die errechneten Phasenwinkel korrigiert, was bei kleinen Winkelfehlern des Schaltträgers durch Subtraktion des Phasenwinkels des Schwarz-Vektors von den errechneten Phasenwinkelwerten erfolgen kann. Die korrigierten Phasenwinkelwerte werden von dem Drucker 110 ausgegeben und gegebenenfalls einer nicht dargestellten automatischen Überwachungsschaltung zugeführt.

Das für die Gewinnung einer Folge von Abtastwerten erforderliche Zeitintervall muß ausreichend lange bemessen werden, damit während der Dauer des Abtastintervalles sämtliche wesentlichen Pegelwerte, von Schwarz bis Weiß, auftreten. Bei Verwendung von Bildsignalen, in deren vertikaler Austastlücke Prüfzeilensignale gemäß CCIR eingeblendet sind, ist diese Forderung stets erfüllt, so daß das Abtastintervall für die Abtast- und Halteschaltungen 50, 60 so gelegt wird, daß es mit der Prüfzeile zusammenfällt, was durch entsprechende Ausbildung des Abtastimpulsgenerators 70 erreicht wird.

## Patentanspruch

1. Verfahren zum Beurteilen der Qualität eines Fernsehsenders, insbesondere hinsichtlich seines Einflusses auf den Differenzträger-Tonempfang, dadurch gekennzeichnet, daß pegelabhängige Phasenabweichungen des AM-modulierten Bildträgersignals direkt mittels folgender Verfahrensschritte gemessen werden und hieraus ein Qualitätskriterium abgeleitet wird :

a) aus dem AM-modulierten Bildträgersignal werden dessen Inphasekomponente I und dessen Quadraturkomponente Q mittels Synchrondemodulation (20, 30) gewonnen ;

b) der Zeitverlauf der I- und Q-Komponenten wird über ein festgelegtes Zeitintervall hinweg abgetastet und zwischengespeichert (50, 60), wobei das Zeitintervall so gewählt ist, daß in dessen Verlauf die wesentlichen Pegelwerte des Bildträgersignals auftreten ;

c) das Bildträgersignal wird während des festgelegten Zeitintervalls kurzzeitig unterbrochen (10), wobei die während der Unterbrechungsdauer auftretenden Werte der I- und Q-Komponenten als Referenzwerte zusätzlich zu den gemäß b) ermittelten Pegelwerten gespeichert werden ;

d) von den außerhalb der Unterbrechungsdauer zwischengespeicherten Abtastwerten der I- und Q-Komponenten werden die zugehörigen Referenzwerte subtrahiert ;

e) für jedes Paar der gemäß d) erhaltenen, kalibrierten Pegelwerte für die I- und Q-Komponenten wird der Phasenwinkel des mit der Bildträgersignalschwingung korrespondierenden Vektors errechnet (100) ;

f) für ein bestimmtes Paar kalibrierter Pegelwerte der I- und Q-Komponenten wird der zugeordnete Phasenwinkel selektiert ;

g) falls der gemäß f) selektierte Phasenwinkel von Null verschieden ist, werden die gemäß e) errechneten Phasenwinkel korrigiert, und

h) aus den korrigierten Phasenwinkelwerten wird das Qualitätskriterium abgeleitet.

## Claim

1. Method for judging the quality of a television transmitter, in particular with respect to its influence on intercarrier sound reception, characterized in that level-dependent phase deviations of the amplitude-modulated vision carrier signal are measured directly by way of the following steps and a quality criterion is derived therefrom :

a) the in-phase component I and quadrature component Q are obtained from the amplitude-modulated vision carrier signal by synchronous detection (20, 30) ;

b) the waveform of the I and Q components is sampled during a fixed time interval and stored temporarily (50, 60), this time interval being selected such that the essential level values of the vision carrier signal occur in the course of the interval ;

c) the vision carrier signal is briefly interrupted (10) during the fixed time interval, the values of the I and Q components which occur during the interruption being stored as reference values in addition to the level values determined in accordance with b) ;

d) the associated reference values are subtracted from the sampled values of the I and Q components stored temporarily while the vision carrier signal is not interrupted ;

e) the phase angle of the vector corresponding to the vision carrier signal is calculated (100) for each pair of calibrated level values of the I and Q components obtained in accordance with d) ;

f) the associated phase angle is selected for a specific pair of calibrated level values of the I and·Q componénts ;

g) if the phase angle selected in accordance with f) differs fròm zero, the phase angles calculated in accordance with e) are connected and

h) the quality criterion is derived from the corrected phase angle values.

### Revendication

1. Procédé pour juger la qualité d'un émetteur de télévision notamment quant à son influence sur la porteuse différentielle de réception du son, caractérisé en ce que l'on dérive les déviations de phase dépendant du niveau du signal de la porteuse-image en modulation AM, directement à l'aide des étapes de procédé suivantes et on en dérive un critère de qualité :

a) à partir du signal de la porteuse-image en modulation AM, on forme ses composantes en phase I et ses composantes en quadrature Q par démodulation synchrone (20, 30) ;

b) on détecte l'évolution dans le temps des composantes I et Q dans un intervalle de temps fixe et on met en mémoire de façon intermédiaire (50, 60), l'intervalle de temps étant choisi qu'au cours de celui-ci on rencontre les grandeurs des niveaux essentiels du signal de la porteuse-image ;

c) on interrompt le signal de la porteuse-image (10) pendant un court instant au cours de l'intervalle de temps fixe, et on met en mémoire les grandeurs des composantes I et Q arrivant pendant cette interruption, comme grandeurs de référence en plus des grandeurs de niveau déterminées selon le point b) ;

d) on soustrait les grandeurs de référence correspondantes des grandeurs de détection mises en mémoire de façon intermédiaire en dehors de la durée d'interruption des composantes I et Q ;

e) pour chaque paire des grandeurs de niveau, calibrées, obtenues selon d) pour chacune des composantes I et Q on calcule (100) l'angle de phase du vecteur correspondant à l'oscillation du signal de la porteuse-image ;

f) pour une paire de grandeurs de niveau, calibrées, déterminée des composantes I et Q, on sélectionne l'angle de phase correspondant ;

g) au cas où l'angle de phase choisi selon f) est différent de zéro, on corrige les angles de phase calculés selon e), et

h) à partir des grandeurs corrigées des angles de phase, on dérive le critère de qualité.

FIG. 1

FIG. 2

FIG. 3